# DEMANDE DE BREVET EUROPEEN

(11) **EP 1 168 864 A1**
(43) Date de publication de la demande: **02.01.2002**
(21) Numéro de dépôt: 01401497.1
(22) Date de dépôt: 11.06.2001
(51) Int. Cl.: H04Q 7/22

(54) **Procédé pour accéder à un service depuis un terminal mobile de radiocommunication à l'aide d'un numéro abrégé**

(30) Priorité: 22.06.2000 FR 0008015
(71) Demandeur: ALCATEL, 75008 Paris (FR)
(72) Inventeur: Marce, Olivier, 91300 Massy (FR); Bazin, Claire, 75014 Paris (FR)
(74) Mandataire: Laroche, Danièle

(57) **Abrégé**

Procédé pour accéder à un service à partir d'un terminal mobile de radiocommunication, parmi un ensemble de services stockés au sein du réseau de télécommunication associé à ce terminal de radiocommunication. Le procédé se caractérise en ce que le service est déterminé par une demande de service comportant un numéro abrégé fourni par l'utilisateur au terminal mobile de radiocommunication, et par la localisation géographique de ce terminal mobile de radiocommunication. L'invention a aussi pour objet une station de contrôle permettant de mettre en oeuvre ce procédé.

## Description

La présente invention concerne un procédé pour accéder à un service accessible localement, depuis un terminal mobile de radiocommunication. Elle s'applique particulièrement bien aux réseaux de type cellulaire tels ceux conformes à la norme GSM de l'ETSI (*European Telecommunication Standards Institute*).

Depuis un terminal mobile de radiocommunication, par exemple conforme aux standards GSM, il est possible d'accéder à différents services. Ces services peuvent avoir des couvertures géographiques plus ou moins étendues.

En effet, on comprend qu'un service permettant à l'utilisateur du terminal d'accéder à ses informations bancaires doive avoir une couverture géographique la plus large possible, c'est-à-dire qu'il doit être accessible quelque soit l'endroit où se trouve l'utilisateur.

Inversement, d'autres services, dits locaux, n'ont un intérêt que si l'usager se trouve dans une zone géographique particulière.

À titre d'exemples de tels services locaux, on peut citer la fourniture d'informations relatives à un établissement commercial situé dans cette zone géographique (restaurants, cinémas, boutiques diverses...) ou bien relatives à un événement, à un musée, à un monument etc.

On peut aussi citer comme exemple, un service local qui serait une adaptation d'un service de couverture large à une zone géographique plus restreinte. On peut faire entrer dans cette catégorie des services de fourniture d'informations météorologiques ou concernant le trafic routier...

Ces services peuvent être interactifs et nécessiter un échange d'informations avec l'utilisateur par le biais de son terminal mobile de radiocommunication, ou bien ne nécessiter qu'un transfert d'information mono-directionnel avec le terminal.

Classiquement, afin d'accéder à des services locaux, l'utilisateur d'un terminal mobile de radiocommunication doit passer par un opérateur humain en charge d'analyser sa requête et de l'aiguiller vers les services disponibles correspondants. Cette façon de faire est coûteuse en temps et/ou en ressources et pose le problème de la localisation de l'utilisateur : en effet, il n'est pas toujours facile pour l'utilisateur de donner sa position géographique précise à l'opérateur.

De plus, elle oblige l'utilisateur à entrer en conversation avec l'opérateur alors qu'il n'est pas nécessairement en mesure de le faire. On peut en effet imaginer la situation où il se trouve dans un véhicule , et où, passant devant la devanture d'un magasin, il désire en savoir plus sur ce magasin en utilisant un service accessible via son terminal de radiocommunication. Auquel cas, dès que l'accès aux services demande plus que quelques manipulations très simples, il nécessite l'arrêt prolongé de l'utilisateur, ce qui n'est pas forcément possible ou désiré.

Une autre façon de faire consiste à mettre en oeuvre des mécanismes de localisation tels ceux utilisant des GPS (*Global Positionning System*) intégrés aux terminaux mobiles de télécommunication, permettant de libérer l'utilisateur du besoin de connaître sa position. Outre le fait que ces mécanismes sont généralement coûteux, ils répondent mal au problème de l'accès au service. En effet, s'ils affranchissent l'utilisateur des difficultés de localisation, ils ne simplifient guère l'accès au service puisque l'utilisateur doit connaître le numéro de téléphone permettant l'accès au service désiré. Dans le cas où le numéro de téléphone est affiché sur la devanture d'un établissement commercial, et où l'utilisateur ne fait que passer devant celui-ci, il peut lui être difficile de mémoriser ce numéro de téléphone.

Pour résoudre ce problème l'invention propose d'utiliser des numéros abrégés qui, utilisés conjointement à des informations de localisation, permettent à l'utilisateur d'accéder à des services locaux de façon facile et rapide.

Pour ce faire, l'invention a pour objet un procédé pour accéder à un service à partir d'un terminal mobile de radiocommunication, parmi un ensemble de services stockés au sein du réseau de télécommunication associé à ce terminal de radiocommunication. Il se caractérise en ce que le service en question est déterminé
- par une demande de service comportant un numéro abrégé fourni par l'utilisateur au terminal mobile de radiocommunication, et
- par la localisation géographique du terminal mobile de radiocommunication.

L'invention a aussi pour objet une station de contrôle permettant de mettre en oeuvre ce procédé.

On comprend que grâce au procédé de l'invention, il est seulement nécessaire qu'un numéro abrégé (2 ou 3 chiffres) soit affiché sur la devanture du magasin pour permettre l'accès direct aux informations relatives au dit magasin. Ce numéro abrégé repère un unique service dans une zone géographique donnée. Cette zone géographique peut par exemple correspondre à la zone de couverture d'une station de contrôle dans le cas d'un réseau de type cellulaire.

Ce numéro abrégé est facilement composable et mémorisable, de sorte que même l'utilisateur qui passe rapidement devant le magasin sans avoir la possibilité de s'arrêter (parce qu'il est en transport en commun, par exemple), peut accéder au service.

Ce numéro abrégé est de plus aisé à composer, y compris par un utilisateur par ailleurs occupé à une autre activité.

L'invention, ses caractéristiques et ses avantages apparaîtront de façon plus claire dans la description de quelques mises en oeuvre qui va suivre en liaison avec les figures annexées.

La figure 1 illustre une première mise en oeuvre de l'invention.

La figure 2 illustre une seconde mise en oeuvre de l'invention.

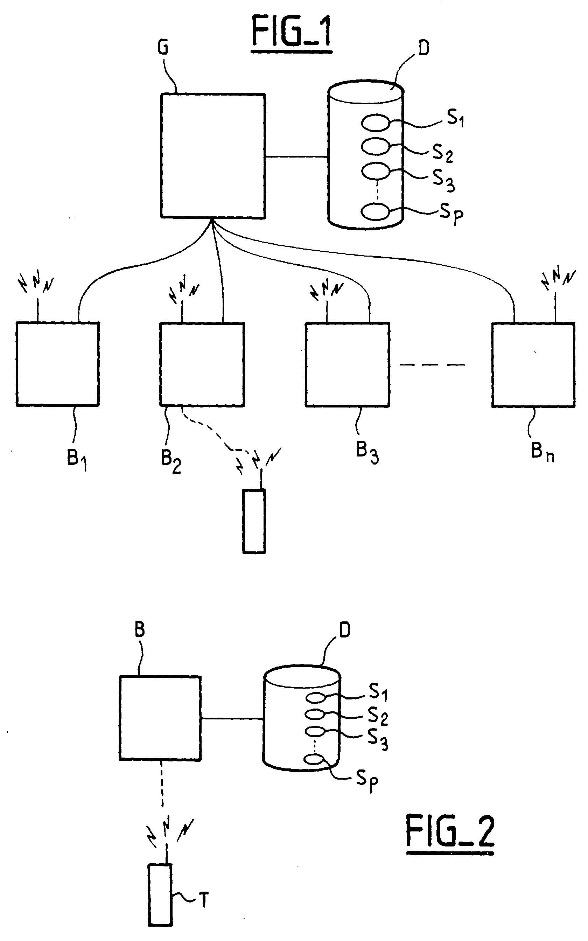

Sur la figure 1, on a représenté un ensemble de stations de contrôle B₁, B₂, B₃... Bₙ. Le terminal mobile de radiocommunication T est connecté (provisoirement) à une unique station de contrôle B₂.

Ces stations de contrôles sont elles-mêmes connectées, par un réseau de télécommunication, à un gestionnaire centralisé G. Ce gestionnaire centralisé G est associé à une base de données D contenant un ensemble de services S₁, S₂, S₃... Sₚ.

Dans le cadre d'un réseau de télécommunication conforme aux spécifications des normes GSM, les stations de contrôle B₁, B₂, B₃... Bₙ sont appelées stations de base et leur zone de couverture est classiquement appelée cellule.

Comme dans la mise en oeuvre illustrée par la figure 1, la première étape du procédé consiste en la saisie par l'utilisateur d'un numéro abrégé. Ce numéro abrégé est transmis comme contenu d'une demande de service émise par le terminal mobile de radiocommunication T à destination de la station de contrôle B₂ à laquelle il est connecté à ce moment-là.

Cette demande de service est typiquement un message, comportant dans son corps le numéro abrégé saisi. Ce message est du même type que ceux utilisés pour demander l'établissement d'une communication normale. Le message est analysé au niveau de la station de contrôle, et étant reconnu comme un numéro abrégé correspondant à l'appel d'un service, il est traité comme tel.

À la réception de la demande de service, la station de contrôle B₂ transmet à un gestionnaire centralisé G un message comportant d'une part le numéro abrégé fourni par le terminal mobile de radiocommunication et d'autre part une information relative à la localisation du terminal mobile de radiocommunication.

Cette information relative à la localisation du terminal mobile de radiocommunication peut être de différentes natures.

Selon un premier mode de réalisation, il peut simplement s'agir de l'identifiant de la station de contrôle B₂ en question. En effet, chaque station de contrôle est associée à une zone géographique correspondant à sa zone de couverture. Ainsi, connaissant l'identifiant de la station de contrôle à laquelle est connecté un terminal mobile de radiocommunication, on en déduit la zone géographique dans laquelle il se situe. La précision de cette localisation, bien que moyenne, s'avère suffisante dans la plupart des cas de figures.

Selon un second mode de réalisation, on peut utiliser des méthodes de l'état de l'art permettant de connaître plus précisément la localisation géographique du terminal mobile de radiocommunication. On peut citer à titre d'exemple le système GPS, précédemment évoqué, ou bien des méthodes de triangulation des signaux radio entre le terminal et plusieurs stations radio.

Dans ce cas, le terminal mobile de radiocommunication, ou la station de contrôle, peuvent déterminer la localisation du terminal et la transmettre à la station de contrôle B₂ à laquelle il est connecté, conjointement au numéro abrégé.

De tels procédés de triangulation sont décrits par exemple dans le document suivant "Mobile positioning, An introduction » ; Mobile Lifestreams ; December 1999.

D'autres procédés sont bien évidemment accessibles à l'homme du métier sans pour autant sortir du cadre de l'invention.

À la réception du message provenant de la station de contrôle B₂, le gestionnaire centralisé a connaissance d'un numéro abrégé et d'une localisation du terminal mobile de radiocommunication T. Ces deux informations sont nécessaires et suffisantes pour déterminer un unique service local parmi l'ensemble de services S₁, S₂, S₃... Sₚ stockés dans la base de données D associée au gestionnaire centralisé G.

Pour ce faire, ce gestionnaire centralisé G peut par exemple posséder une table mettant en correspondance des couples (localisation, numéro abrégé) avec un identifiant du service correspondant dans la base de données D. Cet identifiant peut par exemple être un pointeur.

Suivant le mode de réalisation dans lequel la localisation est donnée par l'identifiant de la station de contrôle, une telle table peut avoir la forme suivante :

| Identifiant de la station de contrôle | Numéro abrégé | Service |
|---|---|---|
| 1 | 42 | Service 1 |
| 1 | 57 | Service 2 |
| 1 | 38 | Service 3 |
| 2 | 42 | Service 4 |
| 3 | 5 | Service 5 |

Sur ce tableau, on peut remarquer que le même numéro abrégé (42) permet d'accéder à des services différents suivant la localisation du terminal mobile de radiocommunication.

Ce numéro abrégé est substantiellement plus court qu'un numéro de téléphone normal. Cela permet la mémorisation rapide de ce numéro abrégé ainsi que sa saisie rapide sur un clavier (ou autre organe de saisie) du terminal mobile de radiocommunication T.

Il est possible d'utiliser un tel numéro abrégé grâce au fait que ce numéro détermine un service au sein d'une zone géographique de taille limitée. On se base donc sur le fait que le nombre de services sur une zone géographique limitée est lui-même limité de sorte qu'un numéro abrégé est suffisant pour l'identifier.

La figure 2 illustre une seconde mise en oeuvre de l'invention.

Sur cette figure 2, on a représenté un terminal mobile de radiocommunication T, une station de contrôle B et une base de données D, contenant des services S₁, S₂, S₃... Sₚ.

Dans une première étape, l'utilisateur du terminal mobile de radiocommunication T saisit un numéro abrégé. Ce numéro abrégé correspond à un service disponible dans la zone géographique dans laquelle il se situe au moment de la saisie de ce numéro abrégé.

Comme dit précédemment, ce numéro abrégé est susceptible d'être affiché sur la devanture d'un établissement commercial afin de permettre aux utilisateurs passant à proximité d'avoir connaissance du service auquel ils peuvent accéder.

Ce numéro abrégé peut également être transmis à l'utilisateur par le réseau lui-même (cette autre mise en oeuvre est décrite plus loin.)

Une fois le numéro abrégé saisi par l'utilisateur, le terminal mobile de radiocommunication T transmet à la station de contrôle à laquelle il est connecté, une demande de service. Cette demande de service est typiquement un message, comportant dans son corps le numéro abrégé saisi. Ce message est du même type que ceux utilisés pour demander l'établissement d'une communication normale. Le message est analysé au niveau de la station de contrôle, et étant reconnu comme un numéro abrégé correspondant à l'appel d'un service, il est traité comme tel.

À la réception de la demande de service, la station de contrôle B détermine lequel des services S₁, S₂, S₃... Sₚ stockés dans sa base de données associée D, correspond au numéro abrégé reçu.

Pour ce faire, la station de contrôle B peut par exemple posséder une table mettant en correspondance chaque numéro abrégé possible avec un identifiant du service correspondant dans la base de données D. Un tel identifiant peut par exemple être un pointeur.

Une telle mise en oeuvre facilite grandement la maintenance des services. En effet, l'ajout ou la modification d'un service est effectué en modifiant la base de données locale D, ce qui est bien moins coûteux que la modification d'une base de données centrale comme dans la mise en oeuvre illustrée par la figure 1.

Par ailleurs, cette mise en oeuvre limite le trafic sur le réseau de télécommunication. En effet, les demandes de service sont traitées localement par les stations de contrôle sans générer de trafic entre celles-ci et un gestionnaire centralisé. Selon une mise en oeuvre de l'invention, le réseau de télécommunication peut fournir à l'utilisateur des numéros abrégés correspondant à des services disponibles dans la zone géographique dans laquelle il se trouve. Ceci peut par exemple être fait au moyen de messages courts par exemple de type SMS (*Short Message Service*) dans le cadre des standards GSM.

Cette fourniture de numéros abrégés peut par exemple être effectuée à la demande de l'utilisateur, ou bien de façon automatique lorsque l'utilisateur entre dans une nouvelle zone géographique (c'est-à-dire lors d'un *hand-over* ou basculement de cellule, par exemple).

Ce service de fournitures peut éventuellement être enrichi par une définition préalable d'un profil utilisateur, par exemple produit par l'utilisateur lui-même, de sorte que seuls lui soit transmis, les numéros abrégés correspondant à des services qui correspondent à ce profil utilisateur.

Ainsi, un utilisateur faisant du tourisme, pourra définir dans son profil qu'il est intéressé par recevoir les numéros abrégés des services concernant les monuments et musées. Au fil de sa promenade, il sera automatiquement averti des numéros des services correspondants aux monuments et musées situés dans son voisinage immédiat.

## Revendications

1. Procédé pour accéder à un service à partir d'un terminal mobile de radiocommunication (T), parmi un ensemble de services (S₁, S₂, S₃... Sₚ) stockés au sein du réseau de télécommunication associé audit terminal de radiocommunication, **caractérisé en ce que** ledit service est déterminé par une demande de service comportant un numéro abrégé fourni par l'utilisateur audit terminal mobile de radiocommunication, et par la localisation géographique dudit terminal mobile de radiocommunication.

2. Procédé selon la revendication 1, dans lequel, à la réception de ladite demande de service, la station de contrôle à laquelle ledit terminal mobile de radiocommunication, fournit ledit numéro abrégé et une information relative à la localisation géographique dudit terminal, à un gestionnaire centralisé (G) associé à une base de données (D) centrale.

3. Procédé selon la revendication 2, dans lequel ladite information relative à la localisation est un identifiant de ladite station de contrôle.

4. Procédé selon la revendication 1, dans lequel ledit ensemble de services est stocké dans une base de données (D) locale associée à la station de contrôle (B) à laquelle ledit terminal mobile de radiocommunication est connecté.

5. Procédé selon l'une des revendications précédentes, dans lequel des numéros abrégés sont communiqués au terminal mobile de radiocommunication (T), par message court de type SMS, afin que l'utilisateur puisse en prendre connaissance.

6. Procédé selon la revendication précédente dans lequel ledit utilisateur produit au préalable un profil utilisateur afin que seuls des numéros abrégés correspondant à des services correspondant audit profil utilisateur, lui soit transmis.

7. Station de contrôle au sein d'un réseau de télécommunication comportant des moyens de communication avec un ensemble de terminaux de radiocommunication, **caractérisée en ce qu'**elle possède en outre des moyens pour mettre en oeuvre le procédé selon l'une des revendications 1 à 6.
